Europäisches Patentamt

European Patent Office

Office européen des brevets

(11) Publication number: **0 369 534**
A1

## (12) EUROPEAN PATENT APPLICATION

(21) Application number: 89202850.7

(51) Int. Cl.5: **E02B 3/00**

(22) Date of filing: 08.11.89

(30) Priority: 14.11.88 NL 8802796

(43) Date of publication of application:
23.05.90 Bulletin 90/21

(84) Designated Contracting States:
BE DE FR GB IT NL SE

(71) Applicant: VOLKER STEVIN
BAGGERMAATSCHAPPIJ NEDERLAND B.V.
Oostmaaslaan 71
NL-3063 AN Rotterdam(NL)

(72) Inventor: Quaak, Marinus Pieter
Utrechtsestraatweg 52H
NL-3445 AT Woerden(NL)

(74) Representative: de Bruijn, Leendert C. et al
Nederlandsch Octrooibureau
Scheveningseweg 82 P.O. Box 29720
NL-2502 LS 's-Gravenhage(NL)

(54) **Method for treating sediment.**

(57) A method for treating sediment, in particular phosphate containing sediment, which has deposited on the bottom of a water region, in which method a treatment agent is injected directly into the sediment, said treatment agent comprising non-gaseous components.

EP 0 369 534 A1

# Method for treating sediment

The invention relates to a method for treating sediment which has deposited on the bottom of a water region, in which method a treatment agent is injected directly into the sediment.

A method of this type is known from the European Patent Application EP-A-0,275,317. In the latter, sediment is treated underwater from a vessel. A mixture of oxygen and water is injected into the sediment. The object of this is to provide low-oxygen sedimentation with oxygen. In order to make an optimum oxygen absorption possible, mixing chambers for gas and water are fitted immediately in front of the nozzles of the known apparatus. The water may contain chemical additives.

From the book entitled "Lake and Reservoir Restoration" by G. Dennis Cooke et al. (1986), pages 133-138, it is known that, to oxidise sediments under water, a solution of calcium nitrate is injected into the sediment in order to stimulate the denitrification. This publication also reports the use of iron chloride and calcium hydroxide to remove hydrogen sulphide and phosphorus and to adjust the pH in order to achieve an optimum pH for the microbial denitrification. The treatment solution is pumped to the bottom via a "harrow-like" apparatus from reservoirs situated on the bank. Said harrow-like apparatus is provided with flexible tubes which penetrate the sediment. The vertical position of the harrow-like apparatus on the bottom is adjusted by regulating the injection of compressed air through the said tubes. The harrow is pulled along the bottom with the aid of a winch which is sited on a raft or on the bottom. In this process, sediment is loosened to a depth of approximately 20 cm and the chemical solutions are injected via the tubes.

This known method has certain disadvantages. Thus, the construction of the harrow-like apparatus having flexible tubes is complicated and fragile. The vertical position of the harrow has to be regulated by injecting compressed air, and this represents a complicating factor. A disadvantage of injecting air and/or oxygen into the sediment is that sludge particles adhere to the rising air bubbles, and this results in a serious and persistent turbidity of the surface water situated above. In addition, the effectiveness of an operation of this type is limited to a relatively short time.

According to the prior art, it is also possible to remove the water bottom sediment by dredging it away or by covering the sediment with a layer of clean material. These known methods are expensive. In addition, in the case of dredging, it is a great problem to find a suitable dumping location for the sediment.

The invention provides a method with which sediment can be treated in a very simple and cheap manner.

The invention relates to a method of the type described in the preamble which is characterized in that a treatment agent is used which is composed of non-gaseous components.

Preferably, the nozzles are directed downwards.

In the method according to the invention, the treatment is preferably carried out from a vessel provided with a tube which can be lowered onto the bottom and is directed transversely to the sailing direction and in which the nozzles are fitted. Examples of apparatuses which are suitable for carrying out the method according to the invention are described in the Dutch Patent Applications 83.00990 and 86.00941. In the method according to Dutch Application 83.00990, a tube provided with outlet openings is used in order to inject water into the layer to be processed, as a result of which said layer temporarily starts to behave as a heavy liquid.

In the method according to the invention, depending on the composition of the sediment, a particular outlet opening of the nozzles and the flow of the liquid treatment agent can be adjusted in order to obtain a desired penetration depth. Over the penetration depth, the injected jet of liquid breaks up the cohesion between the sediment particles, as a result of which a so-called sludge cloud is formed. During the formation of said sludge cloud, the sediment particles are brought into intimate contact with the injected liquid and the treatment agent contained therein, as a result of the turbulent nature of the flows around the outlet openings. In general, the treatment agent will be injected to a depth of 10-40 cm.

In particular, the method according to the invention is suitable for treating the so-called "live" layer of underwater flora and underwater fauna. This live layer is in general approximately 20 cm thick.

In the method according ot the invention, a solution or dispersion in water of at least one substance or micro-organism which renders a pollutant harmless is used as treatment agent. When combating phosphate, use may be made, for example, of substances such as iron(III)chloride or iron(III)sulphate and/or a pH-regulating agent.

The pH of sediment situated underwater can be increased, for example, by supplying lime.

The methods described above are used, in particular, for combating eutrophication due to phosphate in water bottom sediments, excellent results being obtained if a solution of a dispersion of a phosphate-binding agent such as an iron salt is injected directly into the sediment via nozzles.

It has been found that, after carrying out the method according to the invention, a layer of sediment remains behind which is very stable as regards chemical/ physico-chemical binding of the treated or immobilised pollutant because no noxious substances are released therefrom over a long period.

It must be understood that the invention is not limited to the abovementioned prefered embodiments but that many variants are possible without departing from the inventive idea.

## Claims

1. A method for treating sediment which has deposited on the bottom of a water region, in which method a treatment agent is injected directly into the sediment, characterized in that a treatment agent is used which is composed of non-gaseous components.

2. The method according to Claim 1, characterized in that the nozzles are directed downwards.

3. The method according to Claim 1 or 2, characterized in that the treatment is carried out from a vessel provided with a tube which can be lowered onto the bottom and is directed tranversely to the sailing direction and in which the nozzles are fitted.

4. The method according to one of the preceding Claims, characterized in that the treatment agent is injected into the sediment to a depth of 10-40 cm.

5. The method according to one of the preceding Claims, characterized in that a solution or dispersion in water of at least one substance or micro-organism which renders a pollutant harmless is used as treatment agent.

6. The method according to Claim 5, characterized in that an iron salt such as iron(III) chloride or iron(III) sulphate and/or a pH-regulating agent are/is used.

7. A method for combating eutrophication due to phosphate in water bottom sediments according to one of the preceding claims, characterized in that a solution or dispersion of a phosphate-binding agent such as an iron salt is injected directly into the sediment via nozzles.

European Patent
Office

**EUROPEAN SEARCH REPORT**

Application Number

EP 89 20 2850

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,A<br>D | EP-A-0 257 317 (H. STALLZUS)<br>* Column 3, line 35 – column 4, line 4; claims 1,2; figures 1,2 * | 1,2 | E 02 B 3/00 |
| Y | | 3-7 | |
| Y,A<br>D | EP-A-0 243 994 (R.N. VAN WEEZENBEEK)<br>* Whole document * | 3,4 | |
| A,Y<br>D | G.D. COOKE et al.: "Lake and reservoir restoration", 1986, pages 133-138<br>* Pages 133-134: "Sediment Oxidation" * | 5-7 | |
| A | GB-A- 19 624 (J.J. LISTER)(1911)<br>* Whole document * | 1-5 | |
| | | | **TECHNICAL FIELDS SEARCHED (Int. Cl.5)**<br><br>E 02 B |

The present search report has been drawn up for all claims

| Place of search | Date of completion of the search | Examiner |
|---|---|---|
| THE HAGUE | 16-02-1990 | BIRD,C.J. |